# EUROPEAN PATENT APPLICATION

(11) **EP 4 203 411 A1**
(43) Date of publication of application: **28.06.2023**
(21) Application number: 21217341.3
(22) Date of filing: 23.12.2021
(51) Int. Cl.: H04L 41/0803

(54) **AUTOMATIC ENGINEERING, CONFIGURATION AND TESTING OF PROTECTION AND CONTROL DEVICES**

(71) Applicant: Siemens Aktiengesellschaft, 80333 München (DE)
(72) Inventor: SAH, Manoj Kumar, 560100 Bangalore, Karnataka (IN); HARISPURU, Cedric, 90402 Nürnberg (DE)
(74) Representative: Patentanwaltskanzlei WILHELM & BECK

(57) **Abstract**

A computer implemented method (100), an engineering and configuration system (200), and a computer program product for engineering and configuring a protection and control device with protection function(s) associated with electric device(s) deployable in a substation are provided and include obtaining protection function data associated with the protection function(s), generating, based on the protection function data and predetermined mappings, a protection device instance for the protection function(s), and automatically configuring the protection device instance in accordance with the protection function(s) and protection routing signals from the protection function data and the predetermined mappings.

## Description

The present disclosure relates to a system and a method for engineering a power system, more particularly, a protection and control device such as an Intelligent Electronic Device (IED) deployable in a substation. Furthermore, the present disclosure relates to a system and a method for automatically configuring, engineering, and testing substation protection and control devices.

Typically, substations include multiple power and distribution transformers, electrical cables, switching devices, reactive power and grounding equipment, etc. The substations also include devices to protect end electrical equipment being powered by the substations against power system anomalies such as current surges, voltage surges, power swings, faults, process overloads, etc. This protection is generally accomplished with help of Intelligent Electronic Devices, hereinafter referred to as IEDs, that provide different functions including substation protection, control, monitoring, and/or metering.

The IEDs are microprocessor/microcontroller based devices that are associated with primary power system equipment, such as circuit breakers, generators, transformers, power lines, power cables, capacitor banks, etc. The IEDs can receive power system information such as voltage and current from voltage sensors and current sensors respectively, to perform various aforementioned functions.

Common types of IEDs include protective relay devices, load tap changer controllers, circuit breaker controllers, recloser controllers, voltage regulators, bay controllers, fault recorders, merging units, etc. A single IED typically is capable of performing several protection, metering, monitoring and control functions concurrently. However, some protection and automation functions need simultaneous participation from multiple IEDs.

A contemporary substation automation system, based on IEC 61850, generally includes protection and control IEDs, substation automation process controller IEDs, etc., each of the IEDs having their own Human Machine Interfaces (HMI), substation level HMI, and substation to control center gateways. Such equipment typically involves extensive off-line configurations, that is engineering, to be performed, before being deployed in the substation, to perform their individual functions. Additionally, every IED also should be configured for various protections, measurements, monitoring and control functions. This includes performing following configurations either manually and/or in a semi-automatic manner, for example, hardware configuration, application logic configuration such as protection function blocks and connections between them, IEC 61850 communication and data configuration, HMI related configuration, mapping and connection of every input/output (I/O) signal from external IEDs into application logic, mapping of light emitting diodes (LEDs) that indicate statuses, etc.

As most of the above steps to perform configuration are discrete and complex in nature, a configuration engineer has to spend considerable time and effort to finally deploy or commission the substation automation equipment and system. Moreover, the configuration engineer ought to be trained in aspects of substation automation engineering to perform the tasks correctly without errors. The high element of manual configuration makes the entire process prone to mistakes and prone to errors, thereby rendering it inefficient and low in terms of productivity.

Furthermore, engineering and configuration of brown field and/or green field protection and control devices, that is, IEDs, is typically complicated. Conventionally IEDs are configured manually using software or engineering tools, by a configuration engineer, and this engineering data is then sent to the hardware devices using the software or engineering tools.

Furthermore, after engineering the devices, configurations need to be tested with help of the hardware which too is complicated. There exist a large number of setting fields per protection and control device in cases where full functionality of the IED is being configured and these setting fields are configured manually via software tools and later tested to check if the settings satisfy the needs of the substations. Conventionally the engineering or configuration settings are tested either with hardware devices or using external simulators that generate analog current, voltage and digital signals required for testing. Once tested, all reports are generated and updated manually and are published to end customer(s) thus, being subject again to human errors and/or manipulations.

This complete process of configuration, engineering, testing and thereafter report-generation, becomes even further complicated when hardware devices are not available at the customer site/office due to delivery downtimes thereby, leading to delayed testing and/or multiple iterations.

Accordingly, it is an object of the present disclosure to provide an engineering and configuration system and a method that automatically configures and engineers the protection and control device(s), tests the engineering without relying on hardware devices, and also generates test reports accordingly.

The present disclosure achieves the aforementioned object by providing an engineering and configuration system and a computer implemented method for engineering and configuring a protection and control device, such as an IED, with protection function(s) associated with electric device(s) deployable in a substation. As used herein, "protection functions" do not only refer to protection but also monitoring and control functions associated with the electric devices, and include, for example, overvoltage, undervoltage, overcurrent, thermal overload, overfrequency, underfrequency, breaker failure, etc. Also used herein, electric device(s) refer to primary and secondary devices deployable in a substation including, for example, generators, transformers, circuit breakers, voltage regulators, etc. Thus, a configured protection and control device, that is an IED, receives data from various sensors and power equipment and issues control commands, such as tripping of circuit breakers if voltage, current, or frequency anomalies are sensed, or raise/lower tap positions in order to maintain the desired voltage level for a transformer, etc.

The engineering and configuration system and the computer implemented method disclosed herein include obtaining protection function data associated with the protection function(s). As used herein, "protection function data" refers to a desired configuration of the protection and control devices, i.e., IEDs, and includes, for example, desired protection functions with which the IED is to be configured, protection routing signals and/or protection settings required for the IED to carry out the protection functions, etc. The engineering and configuration system and the computer implemented method receive the protection function data from a user of the engineering and configuration system. While obtaining the protection function data, the aforementioned system and method receive requirements associated with the protection function(s), that is, the desired configuration from a user and parse the requirements to obtain the protection function(s) and protection routing signals. As used herein, "protection routing signals" refer to signals that are typically given by the IEDs to the electric devices, and include, for example, trip signal, circuit breaker position signal, etc.

Advantageously, the aforementioned system and method obtain the protection settings based on the protection functions and obtain programmable logic based on the protection routing signals. The protection settings include, for example, values of various parameters such as rated voltage, rated operating current, rated surge current, etc., of the electric device such as a circuit breaker. For example, the protection function requirements may include 400kV line protection from which 400kV is the protection setting. The programmable logic includes, for example, a type of logic connection such as AND logic, OR logic, etc., between various protection routing signals. The programmable logic may be obtained, for example, based on interlocking equations between the protection routing signals specified in the requirements.

According to one embodiment, the engineering and configuration system receives the protection function data from the user in a natural language format, for example, having sentences in plain language that describe the desired configuration. Advantageously, the aforementioned system and method parse the user input received in the natural language to identify one or more keywords associated with the protection function data. Advantageously, when the user input is received in the natural language format, the aforementioned system and method may convert the parsed keywords into one or more standard formats such as ANSI/IEEE/IEC codes.

According to another embodiment, the engineering and configuration system receives the protection function data from the user in a machine language format, for example, including protection functions in one or more codes such as ANSI/IEEE/IEC codes. According to this embodiment, the protection function data is received from the user via an engineering and configuration tool such as DIGSI from Siemens or similar third party engineering and configuration tools.

The engineering and configuration system and the computer implemented method disclosed herein generate, based on the protection function data and predetermined mappings, a protection device instance for the protection function(s).

As used herein, "predetermined mappings" refer to a plurality of relationships between protection function(s), protection and control device(s), protection routing signal(s), attribute(s) of the protection and control device(s), protection setting(s), etc. Advantageously, the predetermined mappings are applicable across different vendors and/or manufacturers of the protection and control devices. Moreover, the predetermined mappings are applicable across various language interpretations and standards and codes, thereby, making the predetermined mappings vendor-agnostic and language-agnostic in nature.

The predetermined mappings include, for example, predetermined device mappings including protection and control devices mapped with the protection functions, predetermined signal mappings including the protection routing signals mapped with attributes, for example, binary input/output, LEDs, etc., associated with the protection and control devices, predetermined function mappings including the protection functions mapped with one another across multiple formats such as natural language and ANSI code names, and/or predetermined setting mappings including the protection settings obtained from the protection function data mapped with one another across multiple formats such as different units including, for example, seconds to milliseconds, volts to kilo volts, etc. The below tables 1-4 show exemplary predetermined mappings as mentioned above.

**Table 1**

| Predetermined Device Mapping | | | | | | | | | | | |
|---|---|---|---|---|---|---|---|---|---|---|---|
| | Protection and Control Devices | | | | | | | | | | |
| | Vendor 1 (for example Siemens) | | | | | Vendor 2 | | | Vendor 3... | | |
| Protection Functions | 7SX XXX | 7SJ XX | 7SJ XX | 7SJ XX | 7SJX X... | Dev ice typ e 1 | Dev ice typ e 2 | Dev ice typ e 3... | Dev ice typ e 1 | Dev ice typ e 2 | Dev ice typ e 3... |
| Thermal overload/TO/ANS I49RMS | | X | | | | X | | | | X | |
| OverVolt/OV/AN SI59 | | | | | | | | | X | | |
| UnderVolt/UV/AN SI27 | X | | | | | X | X | | | X | |
| OverFreq/OF/AN SI81H | X | | | | | | | X | | | X |
| UnderFreq/UF/A NSI81L | | | | | | | | | | | |
| BreakerFailure/B F/ANSI50BF | | | | | | X | | | | X | |

Advantageously, the predetermined device mappings also enable the user to visualize cross-vendor mappings and therefore, product comparisons. For example, in case of retrofitting existing installations or to compare the protection behavior of protection devices across vendors especially when a user, that is, a customer is not satisfied with performance of a protection device from one of the vendors.

**Table 2**

| Predetermined Signal Mapping | | | | | | | | | | |
|---|---|---|---|---|---|---|---|---|---|---|
| | Attributes of Protection and Control Devices | | | | | | | | | |
| | Vendor 1 (for example Siemens) | | | | | | Vendor 2 | | Vendor 3... | |
| | 7SXXXX... | | | | | | Device type 1... | | Device type 1... | |
| Information | Source | | Destination | | | | Sour ce | Destina tion | So urc e | Destinati on |
| Protection Signals | Bina ry Input s | Log ic | Binar y Outp uts | LE Ds | Lo gs | Recor ds... | Bina ry Input s... | Binary Outputs | Bin ary Inp uts | Binary Outputs |
| Trip | | | X | X | X | X | X | | | X |
| Auto-reclose/auto reclose/break er reclose | | X | | | | | X | X | X | X |
| Block | X | | | | X | | | X | | |
| CB Position/Circ uit Breaker Position/Brea ker position... | X | X | | | X | | | X | | X |

Advantageously, the predetermined mappings also comprise the protection functions and the protection settings mapped across languages, for example, natural language and machine language interpretations such as overvoltage, over-voltage, over voltage, over volt, OV, ANSI 49 RMS, ANSI49-RMS, ANSI-49RMS, ANSI49RMS, ANSI-49-RMS, etc. Such mapping enables the aforementioned system and method to process requirements received from the user with accuracy without compromising on the processing speed.

**Table 3**

| Predetermined Function Mapping | | | | | | | |
|---|---|---|---|---|---|---|---|
| | Protection Functions | | | | | | |
| | Vendor 1 | | | | | Vendor 2 | Vendor 3... |
| Protection Functions | overvoltage | Undervoltage | Over Frequency | Under Frequency | BF | OV... | ANSI27... |
| Overvolt | X | | | | | X | X |
| Undervolt | | X | | | | | X |
| OF/ANSI81H | | | X | | | | |
| UF/ANSI81L | | | | X | | | |
| BreakerFailure /ANSI50BF... | | | | | X | | |

**Table 4**

| Predetermined Setting Mapping | | | | | | | |
|---|---|---|---|---|---|---|---|
| | Protection Settings | | | | | | |
| | Vendor 1 | | | | | Vendor 2 | Vendor 3... |
| Protection Settings | V | kV | Hz | kHz | A | Amps... | V... |
| Volts | X | | | | | X | X |
| kilovolts | | X | | | | | |
| Hertz | | | X | | | | |
| KiloHertz | | | | X | | | |
| Amperes | | | | | X | X | |

Advantageously, the predetermined setting mapping also considers information across different makes of the protection and control devices, for example, based on thresholds or tolerances defined for each of the settings by different manufacturers the mappings may be adjusted. Moreover, the predetermined setting mappings also consider conversion factor(s) involved between various metric systems that may be employed by different manufacturers of the protection and control devices.

Also used herein, "protection device instance" refers to a placeholder for the protection and control device which is to be configured. Advantageously, the aforementioned system and method generate the protection device instance based on the predetermined device mapping, shown in table 1. At this point in time, the protection device instance is an empty block which may be populated with information when configured. An exemplary protection device instance is shown below in table 5.

**Table 5**

| | |
|---|---|
| Siemens' 7SXXXX | |
| Protection function(s) | |
| Protection setting(s) | |
| Protection routing signal(s) | |
| Programmable logic connection(s) | |
| Front end display setting(s) | |
| Communication setting(s)... | |

As used herein, "communication setting(s)" refers to the configuration required for establishing communication between two or more protection and control devices, for example, IP addresses of the protection and control devices as provided in IEC 61850 standard for establishing communication over GOOSE (Generic Object Oriented Substation Event) and/or MMS (Manufacturing Message System).

According to one embodiment, when there exists no mapping in the predetermined mappings that is suitable for the protection function data, the aforementioned system and method allow the user to define new entries and associated mappings in the predetermined mappings.

According to another embodiment, the user verifies and validates the protection device instance generated. For example, the aforementioned system and the method generate a protection device instance for Siemens' 7SXXXX, then the user is allowed to verify the same and/or approve or reject the protection device instance based on his/her preference for a protection and control device to be installed.

The aforementioned system and method store the predetermined mappings into a mapping database of the engineering and configuration system. According to one embodiment, the mapping database is a storage in the cloud which is accessible via a communication network such as a wireless communication network by a user of the engineering and configuration system. According to another embodiment, the mapping database is a storage on the local machine, for example, one or more servers installed at the user's premises.

Advantageously, the aforementioned system and method generate the predetermined mappings by predicting relationships associated with the predetermined mappings based on the predetermined mappings stored in the mapping database. For example, based on the existing mappings available, the system and method are capable of predicting new relationships and/or similar relationships thereby, populating the predetermined mappings for multiple protection and control devices of various vendors across various substations.

The aforementioned system and method automatically configure the protection device instance in accordance with the protection function(s) and protection routing signals from the protection function data and the predetermined mappings. The configuration of the protection device instance includes automatically populating the protection device instance, based on the predetermined mappings, with the protection function(s), the protection settings, and/or the protection routing signals. Advantageously, the protection device instance is further populated with programmable logic connections, front end display settings, and/or communication settings. For example, once based on the predetermined device mapping, a suitable protection and control device is selected such as 7SXXXX, and the protection device instance for the same is generated, the predetermined function mapping, the predetermined setting mapping and the predetermined signal mapping are used to populate the protection device instance. Similarly, if there are more than one protection and control devices selected then a protection device instance is generated for each of the protection and control devices and thereby, populated as per the aforementioned description.

An exemplary populated protection device instance is shown in the table 6 below.

**Table 6**

| | |
|---|---|
| Siemens' 7SXXXX | |
| Protection function(s) | • Overvoltage |
| | • Overcurrent |
| | • Breaker Failure |
| Protection setting(s) | • Rated voltage (Volts) |
| | • Pickup Threshold (Amps) |
| | • Operate delay (milliseconds) |
| Protection routing signal(s) | • Trip |
| | • Pickup |
| | • CB Position |
| Programmable logic connection(s) | (OV OR OC) AND BF |
| Front end display setting(s) | • Current/phase |
| | • Voltage |
| | • Frequency |
| | • Trip |
| | • CB Position |
| Communication setting(s) | • IP address of protection and control device 'A' |
| | • IP address of protection and control device 'B' |
| | • IP address of substation control system (SCADA) |

Advantageously, once the protection device instance is populated, that is, configured, the aforementioned system and method render the complete configuration of the protection device instance to the user, for example, in accordance with the license that the user has taken. According to one embodiment, the configuration may be rendered to the user in a format supported by the engineering and configuration tool such as by DIGSI from Siemens. According to another embodiment, the complete configuration may be provided to the user in derivative format(s) such as in .SIM format for visualizing the configuration in a simulation environment or in .TCF format to load the configuration directly into the associated protection and control device.

The aforementioned system and method test the automatically configured protection device instance by generating a simulation of the protection and control device, generating test data based on the protection function data, and testing the simulation based on the test data. For example, after the protection device instance is populated with the configuration information as shown in table 6, the configuration is tested by generating a simulation such as a digital twin of the hardware concerned, that is, the protection and control device concerned, and the configuration is loaded into the digital twin to simulate and test its performance. Advantageously, this enables the aforementioned system and method to engineer, configure and test the configuration without relying on hardware devices thereby, making the entire process.

Furthermore, the aforementioned system and method generate test data including, for example, test books, test scripts, or test sequences based on the protection function data, that is, the protection functions, the protection settings, and/or the programmable logics. Upon generation of the test data the aforementioned system and method allow the user to verify, validate and/or customize the test data manually. The aforementioned system and method then automatically load the test data in the simulation environment, that is, for testing the digital twin of the protection and control device, and thereafter generate test reports of the automated testing for the given configuration. Advantageously, the test data and the test reports obtained post testing are generated in multiple formats for ease of testing in the simulation environment and for ease of understanding and/or documenting by the user respectively.

The aforementioned system and method thus, enable a user to perform the engineering, configuration and testing of protection and control devices with help of the predetermined mappings automatically, for example, in a single click, without requiring any skills or prior experience by the user.

The aforementioned engineering and configuration system for engineering and configuring a protection and control device with one or more protection functions associated with one or more electric devices deployable in a substation comprises a non-transitory computer readable storage medium storing computer program instructions defined by modules of the engineering and configuration system, at least one processor communicatively coupled to the non-transitory computer readable storage medium, and executing the computer program instructions, and the modules of the engineering and configuration system.

According to one embodiment, the engineering and configuration system is configurable as a web-based platform, for example, a website hosted on a server or a network of servers, for engineering and configuring the protection and control device with the protection function(s).

According to another embodiment, the engineering and configuration system is implemented in the cloud computing environment as a cloud computing-based platform implemented as a service for engineering and configuring the protection and control device with the protection function(s).

According to yet another embodiment, the engineering and configuration system is configured as an edge based offering that is installable at the substation and is capable of communicating with a cloud based server and/or a mapping database in the cloud for engineering and configuring the protection and control device with the protection function(s).

According to yet another embodiment, the engineering and configuration system is configurable as a module within an engineering tool, for example, DIGSI5 of Siemens, for engineering and configuring the protection and control device with the protection function(s).

According to one embodiment, the modules of the engineering and configuration system may comprise several sub modules such as a data reception module, a data processing module, etc., communicatively coupled to one another. According to another embodiment, these sub modules may be combined into a single module that defines computer program instructions for engineering and configuring the protection and control device with the protection function(s) as disclosed in the aforementioned description.

Also disclosed herein is a computer program product for engineering and configuring the protection and control device with the protection function(s). The computer program product comprises a non-transitory computer readable storage medium that stores computer program codes comprising instructions executable by at least one processor for engineering and configuring the protection and control device with the protection function(s), as disclosed in aforementioned description.

The above mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: illustrates a process flowchart of a computer-implemented method for engineering and configuring a protection and control device with protection function(s) associated with electric device(s) deployable in a substation, according to an embodiment of the present disclosure.
- FIG 2: illustrates an engineering and configuration system, for engineering and configuring a protection and control device with protection function(s) associated with electric device(s) deployable in a substation, according to an embodiment of the present disclosure.
- FIG 3: is a block diagram illustrating an architecture of a computer system employed by the engineering and configuration system shown in FIG 2, for engineering and configuring a protection and control device with protection function(s) associated with electric device(s) deployable in a substation, according to an embodiment of the present disclosure.

Various embodiments are described with reference to the drawings, wherein like reference numerals are used to refer like elements throughout. In the following description, for the purpose of explanation, numerous specific details are set forth in order to provide thorough understanding of one or more embodiments. It may be evident that such embodiments may be practiced without these specific details.

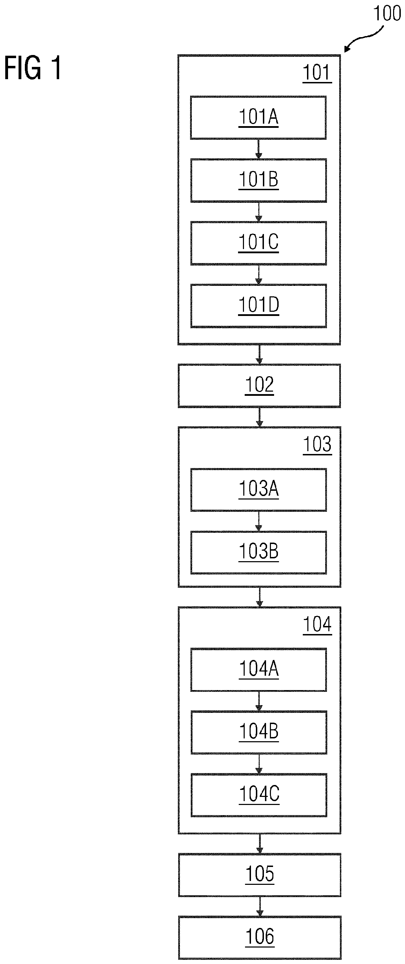

FIG 1 illustrates a process flowchart 100 of a computer-implemented method for engineering and configuring a protection and control device with protection function(s) associated with electric device(s) deployable in a substation, according to an embodiment of the present disclosure.

At step 101, the computer implemented method disclosed herein obtains protection function data associated with the protection function(s). In order to obtain the protection function data, at step 101A, the computer implemented method receives requirements associated with the protection function(s) from a user, for example, a substation configuration engineer, and at step 101B, parses the requirements to obtain the protection function(s) and protection routing signals. At step 101B, in order to parse the requirements, the computer implemented method also checks the format in which the requirements have been received, for example, a natural language format, a machine language format, etc. Based on the format, the computer implemented method employs an appropriate parsing technique such as optical character recognition when the requirements are received in a text format during the natural language processing. At step 101C, the computer implemented method obtains protection settings based on the protection functions and at step 101D obtains programmable logic based on the protection routing signals.

At step 102, the computer implemented method disclosed herein generates based on the protection function data and predetermined mappings, particularly predetermined device mappings, a protection device instance for the protection function(s). The computer implemented method may obtain the predetermined mappings from a mapping database storing the predetermined mappings therewithin. The predetermined mappings comprise the predetermined device mappings including protection and control devices mapped with the protection functions, predetermined signal mappings including the protection routing signals mapped with attributes associated with the protection and control devices, predetermined function mappings including the protection functions mapped with one another across multiple formats, and predetermined setting mappings including protection settings obtained from the protection function data mapped with one another across multiple formats, as disclosed in tables 1-4 of the aforementioned description.

The computer implemented method generates the protection device instance for protection and control device(s) that is/are most suited for the protection functions provided in the protection function data, that is, the requirements from the user. For example, if a protection and control device as per the predetermined device mappings is providing maximum number of protection functions required by the user then this protection and control device is chosen for instantiation. If in case, none of the protection and control devices are found suitable then the computer implemented method generates a notification for the user accordingly and/or prompts the user to provide data associated with the protection and control device of his/her choice. The computer implemented method accordingly updates the predetermined mappings based on the user provided data. Alternatively, the protection device instance selected based on the predetermined device mapping is shown to the user for his/her approval. In case, the user wants an alternative protection and control device then he/she may provide data associated with the protection and control device of his/her choice and the computer implemented method accordingly updates the predetermined mappings based on the user provided data.

At step 103, the computer implemented method automatically configures the protection device instance in accordance with the protection function(s) and protection routing signals from the protection function data and the predetermined mappings, that is, the predetermined signal mappings, the predetermined function mappings, and the predetermined setting mappings. The automatic configuration happens with merely a click of the user, that is, the user upon approving the protection and control device suggested at step 102 for instantiation, may click configure and the entire configuration of the protection and control device happens automatically. For automatically configurating the protection device instance, the computer implemented method at step 103A, automatically populates the protection device instance, based on the predetermined mappings, with the protection function(s), the protection settings, and/or the protection routing signals, as provided in the predetermined mappings shown in tables 2-4 in the aforementioned description. Moreover, at step 103B, the computer implemented method populates the protection device instance with additional details such as programmable logic connections, that is, logical AND, OR, etc., between the protection routing signals, communication settings, such as IP addresses, between various protection and control devices in cases where more than one protection and control device is required, and/or front end display settings such as human machine interface (HMI) settings of the protection and control devices, that is, the IEDs.

At step 104, the computer implemented method tests the automatically configured protection device instance of each of the protection and control device. At step 104A, the computer implemented method generates a simulation of the protection and control device. At step 104B, the computer implemented method generates test data based on the protection function data and at step 104C, the computer implemented method tests the simulation based on the test data. The computer implemented method thus, enables the testing of the configuration to happen automatically and without relying on actual hardware devices. The simulation is, for example, a digital twin of the protection and control device into which the configuration is loaded, and a test sequence is applied thereto to test the configuration.

At step 105, the computer implemented method, based on results of the test sequences applied at step 104, automatically generates test report(s) for the user. These test reports may be presented to the user for verification, validation, and/or approval.

At step 106, the computer implemented method stores the protection function data, the automatically configured protection device instance(s), and/or the predetermined mappings into the mapping database. The computer implemented method may periodically update the mapping database based on the user inputs, the test results, and/or field results when the automatically configured protection and control devices are deployed in the field. Moreover, the computer implemented method may generate predetermined mappings by predicting relationships associated with the predetermined mappings based on the predetermined mappings stored in the mapping database. For example, based on the existing predetermined mappings, the computer implemented method may extrapolate relationships for protection and control devices offered by various vendors and/or deployable in various substations.

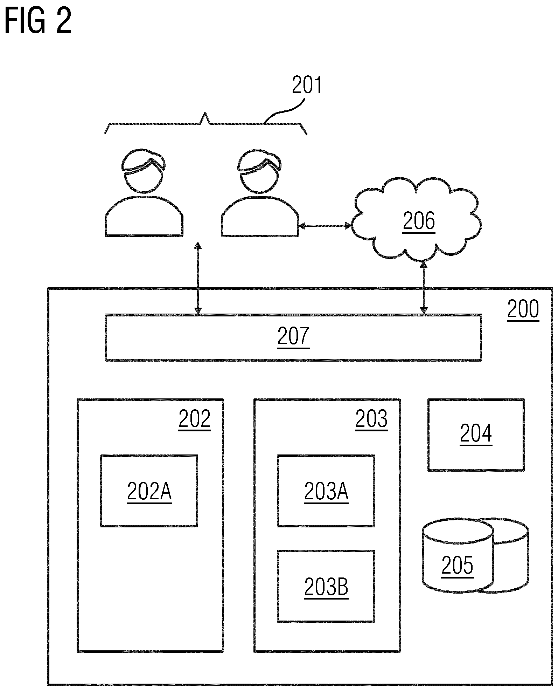

FIG 2 illustrates an engineering and configuration system 200, for engineering and configuring a protection and control device with protection function(s) associated with electric device(s) deployable in a substation, according to an embodiment of the present disclosure.

The engineering and configuration system 200 disclosed herein is installable on and accessible by a user device, for example, a personal computing device, a workstation, a client device, a network enabled computing device, any other suitable computing equipment, and combinations of multiple pieces of computing equipment being used by a user 201 of the engineering and configuration system 200.

The engineering and configuration system 200 disclosed herein is in an operable communication with a communication network 206. The communication network 206 is, for example, a wired network, a wireless network, or a network formed from any combination thereof. The engineering and configuration system 200 is configurable as a web-based platform, for example, a website hosted on a server or a network of servers, or, is implemented in the cloud computing environment as a cloud computing-based platform implemented as a service. A user 201 of the engineering and configuration system 200 in this case accesses the engineering and configuration system 200 via the communication network 206. The engineering and configuration system 200 may have one or more users 201 for example, a configuration engineer, a substation control and monitoring engineer, etc.

The engineering and configuration system 200 disclosed herein comprises a non-transitory computer readable storage medium and at least one processor communicatively coupled to the non-transitory computer readable storage medium. As used herein, "non-transitory computer readable storage medium" refers to all computer readable media, for example, non-volatile media, volatile media, and transmission media except for a transitory, propagating signal. The non-transitory computer readable storage medium is configured to store computer program instructions defined by modules, for example, 202, 203, 204, etc., of the engineering and configuration system 200.

The processor is configured to execute the defined computer program instructions. As illustrated in FIG 2, the engineering and configuration system 200 comprises a graphical user interface (GUI) 207. A user 201 using the user device can access the engineering and configuration system 200 via the GUI 207. The GUI 207 is, for example, an online web interface, a web based downloadable application interface, etc. The engineering and configuration system 200 further comprises a data reception module 202, a data processing module 203, and a data reporting module 204. The engineering and configuration system 200 also includes a mapping database 205.

The data reception module 202 obtains protection function data associated with the protection function(s). The data reception module 202 receives requirements associated with the protection function(s) in a natural language format and/or a machine language format via an engineering and configuration tool such as DIGSI, from a user 201. The data reception module 202 includes a data parsing module 202A that parses the requirements to obtain the protection function(s) and the protection routing signals from the requirements. The data parsing module 202A also obtains protection settings based on the protection functions and obtains programmable logic based on the protection routing signals.

The data processing module 203 generates, based on the protection function data and predetermined mappings, a protection device instance for the protection function(s). The predetermined mappings are stored in the mapping database 205 and include predetermined device mappings, predetermined signal mappings, predetermined function mappings, and/or predetermined setting mappings. The protection device instance is generated based on the predetermined device mappings. The predetermined device mappings include protection and control devices mapped with the protection functions. The predetermined signal mappings including the protection routing signals mapped with attributes associated with the protection and control devices. The predetermined function mappings include the protection functions mapped with one another across multiple formats, The predetermined setting mappings include protection settings obtained from the protection function data mapped with one another across multiple formats. The data processing module 203 of the engineering and configuration system 200 may also generate the predetermined mappings by predicting relationships associated with the predetermined mappings based on the predetermined mappings stored in the mapping database 205.

The data processing module 203 automatically configures the protection device instance in accordance with the protection function(s) and protection routing signals from the protection function data and the predetermined mappings. A device configuration module 203A of the data processing module automatically populates the protection device instance, based on the predetermined mappings, with the protection functions, the protection settings, and/or the protection routing signals, as shown in table 6 in the aforementioned description. A configuration validation module 203B tests the automatically configured protection device instance. In order to test the automatically configured protection device instance, the configuration validation module 203B generates a simulation of the protection and control device, generates test data based on the protection function data, and tests the simulation based on the test data.

The data processing module 203 stores the predetermined mappings, the protection function data, and/or the automatically configured protection device instance, in the mapping database 205. The data reporting module 204 generates test reports in multiple formats after the configuration validation module 203B has tested the simulation using the test data. The reports thus generated are then rendered to the user 201 via the GUI 207.

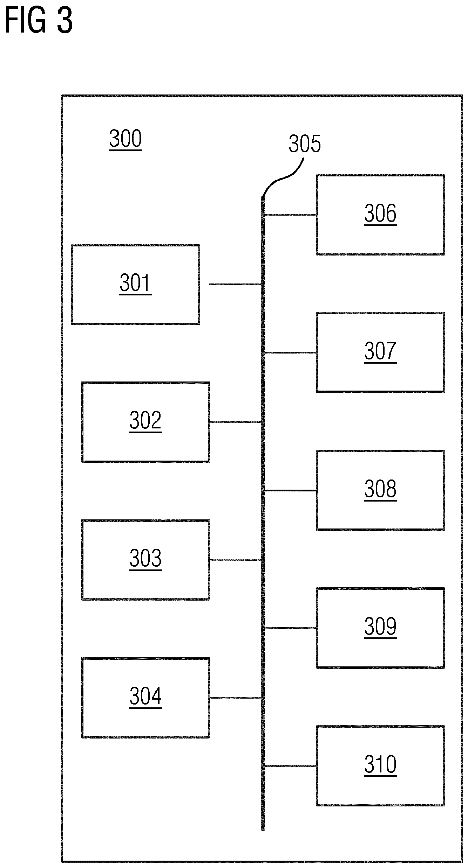

FIG 3 is a block diagram illustrating an architecture of a computer system employed by the engineering and configuration system 200 shown in FIG 2, for engineering and configuring a protection and control device with protection function(s) associated with electric device(s) deployable in a substation, according to an embodiment of the present disclosure.

The engineering and configuration system 200 employs the architecture of the computer system 300. The computer system 300 is programmable using a high-level computer programming language. The computer system 300 may be implemented using programmed and purposeful hardware. The computer system 300 comprises a processor 301, a non-transitory computer readable storage medium such as a memory unit 302 for storing programs and data, an input/output (I/O) controller 303, a network interface 304, a data bus 305, a display unit 306, input devices 307, a fixed media drive 308 such as a hard drive, a removable media drive 309 for receiving removable media, output devices 310, etc.

The processor 301 refers to any one of microprocessors, central processing unit (CPU) devices, finite state machines, microcontrollers, digital signal processors, an application specific integrated circuit (ASIC), a field-programmable gate array (FPGA), etc., or any combination thereof, capable of executing computer programs or a series of commands, instructions, or state transitions. The processor 301 may also be implemented as a processor set comprising, for example, a general-purpose microprocessor and a math or graphics co-processor. The engineering and configuration system 200 disclosed herein is not limited to a computer system 300 employing a processor 301. The computer system 300 may also employ a controller or a microcontroller. The processor 301 executes the modules, for example, 202, 203, 204, etc., of the engineering and configuration system 200.

The memory unit 302 is used for storing programs, applications, and data. For example, the modules 202, 203, 204, etc., of the engineering and configuration system 200 are stored in the memory unit 302 of the computer system 300. The memory unit 302 is, for example, a random-access memory (RAM) or another type of dynamic storage device that stores information and instructions for execution by the processor 301. The memory unit 302 also stores temporary variables and other intermediate information used during execution of the instructions by the processor 301. The computer system 300 further comprises a read only memory (ROM) or another type of static storage device that stores static information and instructions for the processor 301. The I/O controller 303 controls input actions and output actions performed by the engineering and configuration system 200.

The network interface 304 enables connection of the computer system 300 to the communication network 206. For example, the engineering and configuration system 200 connects to the communication network 206 via the network interface 304. In an embodiment, the network interface 304 is provided as an interface card also referred to as a line card. The network interface 304 comprises, for example, interfaces using serial protocols, interfaces using parallel protocols, and Ethernet communication interfaces, interfaces based on wireless communications technology such as satellite technology, radio frequency (RF) technology, near field communication, etc. The data bus 305 permits communications between the modules, for example, 202, 203, 204, etc., of engineering and configuration system 200.

The display unit 306, via the graphical user interface (GUI) 207, displays information such as the complete configuration of the protection and control device, the protection and control device selected for instantiation, test reports after testing the simulation of the complete configuration, etc. The display unit 306, via the GUI 207, also displays information such as user interface elements including text fields, buttons, windows, etc., for allowing a user to provide his/her inputs such as the requirements from which the protection function data is obtained. The display unit 306 comprises, for example, a liquid crystal display, a plasma display, an organic light emitting diode (OLED) based display, etc. The input devices 307 are used for inputting data into the computer system 300. The input devices 307 are, for example, a keyboard such as an alphanumeric keyboard, a touch sensitive display device, and/or any device capable of sensing a tactile input.

Computer applications and programs are used for operating the computer system 300. The programs are loaded onto the fixed media drive 308 and into the memory unit 302 of the computer system 300 via the removable media drive 309. In an embodiment, the computer applications and programs may be loaded directly via the communication network 206. Computer applications and programs are executed by double clicking a related icon displayed on the display unit 306 using one of the input devices 307. The output devices 310 output the results of operations performed by the engineering and configuration system 200. For example, the engineering and configuration system 200 provides graphical representation of the complete configuration of the protection and control device(s), using the output devices 310.

The processor 301 executes an operating system. The computer system 300 employs the operating system for performing multiple tasks. The operating system is responsible for management and coordination of activities and sharing of resources of the computer system 300. The operating system further manages security of the computer system 300, peripheral devices connected to the computer system 300, and network connections. The operating system employed on the computer system 300 recognizes, for example, inputs provided by the users 201 using one of the input devices 307, the output display, files, and directories stored locally on the fixed media drive 308. The operating system on the computer system 300 executes different programs using the processor 301. The processor 301 and the operating system together define a computer platform for which application programs in high level programming languages are written.

The processor 301 of the computer system 300 employed by the engineering and configuration system 200 retrieves instructions defined by the modules 202, 203, 204, etc., of the engineering and configuration system 200 for performing respective functions disclosed in the detailed description of FIG 2. The processor 301 retrieves instructions for executing the modules, for example, 202, 203, 204, etc., of the engineering and configuration system 200 from the memory unit 302. A program counter determines the location of the instructions in the memory unit 302. The program counter stores a number that identifies the current position in the program of each of the modules, for example, 202, 203, 204, etc., of the engineering and configuration system 200. The instructions fetched by the processor 301 from the memory unit 302 after being processed are decoded. The instructions are stored in an instruction register in the processor 301. After processing and decoding, the processor 301 executes the instructions, thereby performing one or more processes defined by those instructions.

At the time of execution, the instructions stored in the instruction register are examined to determine the operations to be performed. The processor 301 then performs the specified operations. The operations comprise arithmetic operations and logic operations. The operating system performs multiple routines for performing several tasks required to assign the input devices 307, the output devices 310, and memory for execution of the modules, for example, 202, 203, 204, etc., of the engineering and configuration system 200. The tasks performed by the operating system comprise, for example, assigning memory to the modules, for example, 202, 203, 204, etc., of the engineering and configuration system 200, and to data used by the engineering and configuration system 200, moving data between the memory unit 302 and disk units, and handling input/output operations. The operating system performs the tasks on request by the operations and after performing the tasks, the operating system transfers the execution control back to the processor 301. The processor 301 continues the execution to obtain one or more outputs. The outputs of the execution of the modules, for example, 202, 203, 204, etc., of the engineering and configuration system 200 are displayed to the user on the GUI 207.

For purposes of illustration, the detailed description refers to the engineering and configuration system 200 being run locally on the computer system 300, however the scope of the present invention is not limited to the engineering and configuration system 200 being run locally on the computer system 300 via the operating system and the processor 301, but may be extended to run remotely over the communication network 206 by employing a web browser and a remote server, a mobile phone, or other electronic devices. One or more portions of the computer system 300 may be distributed across one or more computer systems (not shown) coupled to the communication network 206.

Disclosed herein is also a computer program product comprising a non-transitory computer readable storage medium that stores computer program codes comprising instructions executable by at least one processor 301 for engineering and configuring a protection and control device with one or more protection functions associated with one or more electric devices deployable in a substation, as disclosed in aforementioned description.

The computer program product comprises a first computer program code for obtaining protection function data associated with the protection function(s); a second computer program code for generating, based on the protection function data and predetermined mappings, a protection device instance for the protection function(s); and a third computer program code for automatically configuring the protection device instance in accordance with the protection function(s) and protection routing signals from the protection function data and the predetermined mappings.

In an embodiment, a single piece of computer program code comprising computer executable instructions, performs one or more steps of the computer implemented method according to the present disclosure, for engineering and configuring a protection and control device with the protection function(s). The computer program codes comprising computer executable instructions are embodied on the non-transitory computer readable storage medium. The processor 301 of the computer system 300 retrieves these computer executable instructions and executes them. When the computer executable instructions are executed by the processor 301, the computer executable instructions cause the processor 301 to perform the steps of the computer implemented method for engineering and configuring a protection and control device with the protection function(s).

Where databases are described such as the mapping database 205, it will be understood by one of ordinary skill in the art that (i) alternative database structures to those described may be readily employed, and (ii) other memory structures besides databases may be readily employed. Any illustrations or descriptions of any sample databases disclosed herein are illustrative arrangements for stored representations of information. Any number of other arrangements may be employed besides those suggested by tables illustrated in the drawings or elsewhere. Similarly, any illustrated entries of the databases represent exemplary information only; one of ordinary skill in the art will understand that the number and content of the entries can be different from those disclosed herein. Further, despite any depiction of the databases as tables, other formats including relational databases, object-based models, and/or distributed databases may be used to store and manipulate the data types disclosed herein. Likewise, object methods or behaviors of a database can be used to implement various processes such as those disclosed herein. In addition, the databases may, in a known manner, be stored locally or remotely from a device that accesses data in such a database. In embodiments where there are multiple databases in the system, the databases may be integrated to communicate with each other for enabling simultaneous updates of data linked across the databases, when there are any updates to the data in one of the databases.

The present disclosure can be configured to work in a network environment comprising one or more computers that are in communication with one or more devices via a network. The computers may communicate with the devices directly or indirectly, via a wired medium or a wireless medium such as the Internet, a local area network (LAN), a wide area network (WAN) or the Ethernet, a token ring, or via any appropriate communications mediums or combination of communications mediums. Each of the devices comprises processors, some examples of which are disclosed above, that are adapted to communicate with the computers. In an embodiment, each of the computers is equipped with a network communication device, for example, a network interface card, a modem, or other network connection device suitable for connecting to a network. Each of the computers and the devices executes an operating system, some examples of which are disclosed above. While the operating system may differ depending on the type of computer, the operating system will continue to provide the appropriate communications protocols to establish communication links with the network. Any number and type of machines may be in communication with the computers.

The present disclosure is not limited to a particular computer system platform, processor, operating system, or network. One or more aspects of the present disclosure may be distributed among one or more computer systems, for example, servers configured to provide one or more services to one or more client computers, or to perform a complete task in a distributed system. For example, one or more aspects of the present disclosure may be performed on a client-server system that comprises components distributed among one or more server systems that perform multiple functions according to various embodiments. These components comprise, for example, executable, intermediate, or interpreted code, which communicate over a network using a communication protocol. The present disclosure is not limited to be executable on any particular system or group of systems, and is not limited to any particular distributed architecture, network, or communication protocol.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

### List of Reference Numerals

- 200: engineering and configuration system
- 201: user
- 202: data reception module
- 202A: data parsing module
- 203: data processing module
- 203A: device configuration module
- 203B: configuration validation module
- 204: data reporting module
- 205: mapping database
- 206: communication network
- 207: graphical user interface (GUI)
- 300: computer system
- 301: processor
- 302: memory unit
- 303: input/output (I/O) controller
- 304: network interface
- 305: data bus
- 306: display unit
- 307: input devices
- 308: fixed media drive
- 309: removable media drive
- 310: output devices

## Claims

1. A computer implemented method (100) for engineering and configuring a protection and control device with one or more protection functions associated with one or more electric devices deployable in a substation, comprising:
- obtaining (101) protection function data associated with the one or more protection functions;
- generating (102), based on the protection function data and predetermined mappings, a protection device instance for the one or more protection functions; and
- automatically configuring (103) the protection device instance in accordance with the one or more protection functions and protection routing signals from the protection function data and the predetermined mappings.

2. The computer implemented method (100) according to claim 1, wherein obtaining the protection function data comprises:
- receiving (101A) requirements associated with the one or more protection functions; and
- parsing (101B) the requirements to obtain the one or more protection functions and the protection routing signals.

3. The computer implemented method (100) according to claim 2, further comprising performing one or more of:
- obtaining (101C) protection settings based on the protection functions; and
- obtaining (101D) programmable logic based on the protection routing signals.

4. The computer implemented method (100) according to claim 1, wherein the predetermined mappings comprise one or more of:
- predetermined device mappings including protection and control devices mapped with the protection functions;
- predetermined signal mappings including the protection routing signals mapped with attributes associated with the protection and control devices;
- predetermined function mappings including the protection functions mapped with one another across multiple formats; and
- predetermined setting mappings including protection settings obtained from the protection function data mapped with one another across multiple formats.

5. The computer implemented method (100) according to claim 1, further comprising storing (106) one or more of the predetermined mappings, the protection function data, and the automatically configured protection device instance, in a mapping database.

6. The computer implemented method (100) according to claim 5, further comprising generating the predetermined mappings by predicting relationships associated with the predetermined mappings based on the predetermined mappings stored in the mapping database.

7. The computer implemented method (100) according to claim 1, wherein configuring the protection device instance comprises automatically populating (103A) the protection device instance, based on the predetermined mappings, with one or more of the protection functions, the protection settings, and the protection routing signals.

8. The computer implemented method according to claim 1, further comprising testing (104) the automatically configured protection device instance by:
- generating (104A) a simulation of the protection and control device;
- generating (104B) test data based on the protection function data; and
- testing (104C) the simulation based on the test data.

9. A computer-program product having machine-readable instructions stored therein, which when executed by one or more processing units, cause the processing units to perform the computer implemented method (100) according to the claims 1 to 8.

10. An engineering and configuration system (200) for engineering and configuring a protection and control device with one or more protection functions associated with one or more electric devices deployable in a substation, comprising:
- a non-transitory computer readable storage medium storing computer program instructions defined by modules of the engineering and configuration system (200);
- at least one processor (301) communicatively coupled to the non-transitory computer readable storage medium, wherein the at least one processor (301) executes the computer program instructions; and
- the modules of the engineering and configuration system (200) configured to:
∘ obtain protection function data associated with the one or more protection functions;
∘ generate, based on the protection function data and predetermined mappings, a protection device instance for the one or more protection functions; and
∘ automatically configure the protection device instance in accordance with the one or more protection functions and protection routing signals from the protection function data and the predetermined mappings.

11. The engineering and configuration system (200) according to claim 10, wherein in obtaining the protection function data the modules of the engineering and configuration system are configured to:
- receive requirements associated with the one or more protection functions; and
- parse the requirements to obtain the one or more protection functions and the protection routing signals.

12. The engineering and configuration system (200) according to claim 11, wherein in obtaining the protection function data the modules of the engineering and configuration system are further configured to perform one or more of:
- obtain protection settings based on the protection functions; and
- obtain programmable logic based on the protection routing signals.

13. The engineering and configuration system (200) according to claim 10, wherein the predetermined mappings comprise one or more of:
- predetermined device mappings including protection and control devices mapped with the protection functions;
- predetermined signal mappings including the protection routing signals mapped with attributes associated with the protection and control devices;
- predetermined function mappings including the protection functions mapped with one another across multiple formats; and
- predetermined setting mappings including protection settings obtained from the protection function data mapped with one another across multiple formats.

14. The engineering and configuration system (200) according to claim 10, wherein the modules of the engineering and configuration system are configured to perform one or more of:
- store one or more of the predetermined mappings, the protection function data, and the automatically configured protection device instance, in a mapping database; and
- generate the predetermined mappings by predicting relationships associated with the predetermined mappings based on the predetermined mappings stored in the mapping database.

15. The engineering and configuration system (200) according to claim 10, wherein in configuring the protection device instance, the modules of the engineering and configuration system are configured to perform one or more of:
- automatically populate the protection device instance, based on the predetermined mappings, with one or more of the protection functions, the protection settings, and the protection routing signals; and
- test the automatically configured protection device instance, wherein in testing the automatically configured protection device instance, the modules of the engineering and configuration system are configured to:
∘ generate a simulation of the protection and control device;
∘ generate test data based on the protection function data; and
∘ test the simulation based on the test data.
